# EUROPEAN PATENT SPECIFICATION

(11) **EP 1 188 166 B1**
(45) Date of publication and mention of the grant of the patent: **13.09.2006**
(21) Application number: 00939557.5
(22) Date of filing: 02.06.2000
(51) Int. Cl.: H01B 3/04, H01B 7/28, H01B 7/29, H01B 7/295

(54) **INSULATED ELECTRICAL CONDUCTOR**
ISOLIERTER ELEKTRISCHER LEITER
CONDUCTEUR ELECTRIQUE ISOLE

(30) Priority: 02.06.1999 US 324345
(43) Date of publication of application: 20.03.2002
(73) Proprietor: TYCO Electronics Corporation, Middletown, PA 17057-3163 (US); COMPAGNIE ROYALE ASTURIENNE DES MINES, DIVISION CO GEBI, SOCIETE ANONYME, 1040 Bruxelles (BE)
(72) Inventor: NYBERG, ERIC, Belmont, CA 94002 (US); MERCER, Frank, W., Belmont, CA 94002 (US)
(74) Representative: pronovem
(86) International application number: PCT/US2000/015380
(87) International publication number: WO 2000/074075

(56) References cited:
- EP-A- 0 106 708
- WO-A-86/03329
- CH-A- 469 329

## Description

### BACKGROUND OF THE INVENTION

### Field of the Invention

This invention relates to insulated electrical conductors.

### Introduction to the Invention

Polyimides, e.g. polypyromellitimides, and ethylene-co-tetrafluoroethylene copolymers such as those sold by E.I. du Pont de Nemours and Company, under the trademarks Kapton™ and Tefzel™ respectively, are known to have good thermal, mechanical, and flammability properties, as are certain polyetherimide polymers. These polymers, therefore, are used as insulation material for high performance wire and cable. Existing thin-wall, high performance wire and cable constructions utilize several different types of jacket construction. These include single or multi-layer cross-linked poly(ethylene-co-tetrafluoroethylene) (e.g. Spec 55™ wire), polyimide (e.g. Kapton), and a composite wire construction consisting of a Kapton tape polyimide inner layer covered with a PTFE (polytetrafluoroethylene) tape outer wrap. All of these known constructions are inferior to the wire of the present invention in one or more important respects. For example, Spec 55 wire is rated for a maximum of 200°C but has relatively low cut-through resistance at elevated temperatures. Most polyimides are not thermoplastic, and they therefore cannot readily be applied to a conductor by melt extrusion. Typically, they are formed into a tape, and the conductor is wrapped with that tape in an overlapping fashion. However, the polyimide tapes are not self-sealing. It has been known to coat a core layer of a polyimide with a fluoropolymer on one or, sometimes, both sides, thereby forming a laminated tape structure, which can be heated after wrapping to fuse the wrapped tape to itself. Tapes prepared from these laminates, and the insulating of electrical conductors by wrapping with such tapes, are known. For a description of prior art wire constructions see, for example, U.S. Patents Nos. 3,616,177; 4,628,003; 5,106,673; 5,220,133; 5,238,748; and 5,399,434. The disclosures of these and other patents, patent applications, and publications discussed in this application are incorporated herein by reference.

Because currently used polyimides are aromatic condensation polymers, wires insulated with such polyimides frequently show poor resistance to both hydrolysis and arc tracking. Hydrolysis is a chemical reaction which although occurring in the presence of water, is often promoted by other chemical species, and which generally reduces a polymer's mechanical strength by reducing its molecular weight. Arc tracking is a catastrophic failure in the presence of an electrical arc when a short circuit occurs between the conductor and ground or a conducting medium external to the insulation, such as another conductor (for example, when two wires rub together), a metallic structure (for example, when a wire rubs against a supporting metallic structure such as an airframe), or an even moderately conductive fluid. Such a failure causes mechanical damage to the insulation which rapidly propagates at the elevated temperature of the electric arc.

Because of the generally poor resistance of polyimides to both arc tracking and hydrolysis, wire for demanding applications such as, for example, the aerospace industry, is frequently fabricated by insulating electrical conductors with two wrapped layers: an inner layer of a polyimide or a polyimide-fluoropolymer laminate, and an outer layer of a fluoropolymer, particularly polytetrafluoroethylene. U.S. Patent No. 5,220,133 discloses the use of this multi-layer wrapped construction, which is asserted to be especially useful for insulated conductors having low diameter and weight, as is particularly desirable for use in aerospace applications. However, when a polytetrafluoroethylene tape is used as an outer layer, the high temperature needed to sinter and fuse the polytetrafluoroethylene may damage the tin plating of tin-plated copper conductors. Also, the resulting polytetrafluoroethylene outer layer is difficult to mark, and the outer surface of the insulated wire has a stepped contour which is readily damaged in handling. As indicated, composite Kapton/PTFE wire tends to have an uneven outer surface which may snag on corners, and may be subject to tearing during shop handling or installation. If the PTFE outer layer is damaged, the Kapton polyimide inner layer is thus subject to hydrolysis and arc tracking. This problem is, of course, exacerbated on Kapton wires having no PTFE tape covering over the Kapton jacket layer.

The most common current alternative to polyimide insulation for insulated conductors in aerospace and other high performance applications utilizes crosslinked fluoropolymers. A dual-layer insulated conductor, where the inner layer is an uncrosslinked or lightly crosslinked crystalline poly(ethylene-co-tetrafluoroethylene) and the outer layer is highly crosslinked crystalline poly(ethylene-co-tetrafluoroethylene), is described in U.S. Patent No. 5,059,483. While these materials and constructions are more resistant to arc-tracking and hydrolysis than polyimide based insulations, they are thermally stable to only about 200°C and exhibit inferior cut-through performance at temperatures greater than about 150°C. Cut-through performance, also referred to as "pinch", is measured as the force required for a blunt blade or edge to penetrate a wire insulation at a specified temperature.

Characteristics that are particularly desired in a high-performance (especially airframe) wire and cable are light weight and small diameter, good cut-through, arc-track and abrasion resistance and thermal stability, low flammability, insensitivity to water and common solvents, and a smooth outer surface contour. None of the currently available polymers including fluoropolymers either alone or in combination with other materials, for example polyimides, provides a wire insulation which meets all of these desired performance characteristics. It would be particularly desirable to produce an insulated conductor exhibiting this desired combination of performance characteristics and also comprising materials which are individually resistant to arc-tracking and hydrolysis. This would eliminate failure modes which may result from damage to an outer protective layer, thereby exposing a sub-layer to degradation (for example, tearing of a polytetrafluoroethylene outer layer protecting a polyimide layer beneath).

It is particularly difficult to obtain good cut-through performance at elevated temperatures in combination with the other required high performance wire properties. The most direct strategy for obtaining good cut-through resistance is to utilize thick walls, but this approach imposes the penalty of increased cost, diameter and weight. Second, one may employ thermoplastic polymers having melt or glass transition temperatures significantly above the wire's service temperature rating (but below the polymer's softening temperature). These materials, however, are either very expensive (e.g. polyarylether ketones), susceptible to hydrolysis (e.g. certain condensation polymers), prone to arc-tracking (e.g. many aromatic polymers), and/or have insufficient resistance to thermal degradation (e.g. polyolefins and polyesters). Above the polymer softening temperature, as measured for example by heat deflection temperature, even thick walls have little beneficial effect on cut-through performance. Third, one may employ tough, thin films or tapes as one component of the wire insulation, for example aromatic polyester or polyimide films. These tapes suffer from the limitations noted for many thermoplastic polymers: if they are aromatic polyimide condensation polymers they are expensive and are subject to both arc-tracking and hydrolysis; while polyesters exhibit poor thermal aging characteristics.

Attempts to improve the cut-through performance of melt processible polymers which otherwise approximately meet requirements by crosslinking or by the inclusion of reinforcing organic or inorganic fillers to form a composite material have also failed to meaningfully improve cut-through at elevated temperatures. In both cases, cut-through resistance drops to unacceptable levels as the polymer softens on heating. This is true even for polymers loaded with up to 30 volume percent of reinforcing fillers such as fumed silica, glass fiber or mica. Furthermore, filler loadings of 30 volume percent or sometimes even less may be impractical if they result in materials with melt viscosities so great that they cannot be conveniently extrusion processed, or afford tapes having insufficient tensile and/or elongation properties for tape-wrapping.

In the search for a wire insulation system possessing the necessary cut-through resistance at elevated temperatures along with the other required physical, chemical and electrical properties, wire constructions comprising continuous fibers have also been explored. Fiber can be incorporated in wire constructions by a number of methods, for example spiral wrapping continuous fibers directly, wrapping tape comprising densely packed fibers imbedded in a suitable polymer, wrapping dense fabric as a tape, with or without a polymer impregnation or by braiding fiber on the wire. Wires comprising braided fibers underneath an extruded polymer outer layer for the purpose of improving cut-through at elevated temperatures suffer from two serious drawbacks, however. First, they are expensive to process because the fibers must be applied by braiding, an inherently slow process. Second, high cut-through forces are generally obtained with braided fibers only when the surrounding polymer is quite hard or rigid. U.S. Patent No. 5,171,635 reports values for cut-through at 150°C which possibly are only a small fraction of those observed at 23°C. Cut-through values are frequently not reported at higher temperatures because the materials which are thermally stable at these temperatures, for example ETFE or PFA (poly(perfluoropropylvinylether-co-tetrafluoroethylene)), are too soft to support the fibers as the cut-through blade or edge pushes into the insulation.

Mica tapes have long been used for the insulation of wire and cable in conjunction with one or more polymer layers. This is due to this mineral's excellent thermal and dielectric properties which provide good fire resistance and high insulation values. Mica itself is also very stable to a wide range of chemicals, including those which promote hydrolysis. However, existing mica tapes suffer from one or more of the following disadvantages when compared to the mica tapes of the present invention:
(a) a tendency to undergo solvent or heat induced delamination;
(b) thermal degradation of a required adhesive layer when using arc-track resistant materials;
(c) excessive thickness and/or stiffness, particularly after exposure to elevated temperatures;
(d) use of solvent-based materials which are environmentally unfriendly and/or require long, and therefore expensive, fabrication times;
(e) irregular surfaces comprising materials to which it is difficult to bond a subsequent covering layer of tape or other material;
(f) insufficient mechanical strength to permit tape wrapping (especially of small gauge conductor) at practical processing speeds.

As a result, the tapes of the prior art are suboptimal especially for use in demanding environments such as aerospace and marine applications. We have now found, quite unexpectedly, that many of these prior art mica tape limitations are substantially overcome by using the methods of fabrication and constructions of the present invention as hereinafter set forth.

Furthermore, we have found that when the mica tapes of the present invention are employed in the wire constructions of the present invention, even as thin layers so as to provide thin-walled, light-weight insulations, remarkably and unexpectedly high cut-through forces are obtained (at least 50 N) over a wide range of temperatures. These cut-through forces are similar to those obtained with wire having polyimide jackets of similar thickness without suffering the disadvantages of polyimide insulation. In one embodiment of the present invention, a dual layer construction is utilized, wherein, the conductor is covered first with the coated mica tape (as hereinafter defined) of the current invention and then a second tape-wrapped or extruded outer layer of perfluoropolymer is applied over the coated mica tape layer. The cut-through resistance of this dual layer construction is superior, especially at elevated temperatures, to that of a jacket consisting only of a perfluoropolymer layer having a thickness equal to the combined coated mica tape/perfluoropolymer dual layer construction fabricated in accordance with the present invention.

The wires of the present invention, employing the claimed coated mica tapes, also exhibit thermal stability superior to existing wires comprising prior art mica tapes, as well as to cross-linked ETFE jacketed wire constructions. Compared to polyimide, our insulation construction has superior chemical and arc tracking resistance, and superior wire stripping properties (an important installation cost factor). Although some other known wire constructions are superior to polyimide in chemical resistance, they are distinctly inferior in cut-through and thermal stability. Likewise, other known wire constructions impose weight and/or thickness problems. It is thus apparent that the wire construction of the present invention is uniquely superior in terms of providing an optimum balance of properties, particularly in terms of meeting the requirements for severe service conditions, such as in aerospace and marine applications.

Mica is a generic term that applies to a wide range of hydrous aluminum silicate minerals generally, although not invariably, characterized by sheet-like structure, and possessing to varying degrees, flexibility, elasticity, hardness, and the ability to be split into thin sheets. Mica exists in nature in a variety of compositions. Muscovite and phlogopite are two naturally occurring micas of commercial importance. Fluorophlogopite is a widely used synthetic mica. Both natural and synthetic mica are suitable for use in the practice of the current invention as are a variety of other related aluminum silicates including smectites and related 2:1-layer minerals including montmorillonite, beidellite, hectorite, saponite, vermiculite, talc, and various chlorites and illites. The term "mica" as used in the present invention is intended to encompass all such so called "average negative charge" aluminum silicates. See for example, U.S. Patent No. 4,707,298 for a description of many of such aluminum silicates. Mica is used for many industrial applications, particularly in the electrical and electronic industries because of its high dielectric strength, uniform dielectric constant, low power loss (high power factor), high electrical resistivity, and low temperature coefficient of expansion. Mica also resists temperatures of at least 600°C. In addition, mica is nonflammable, does not give off smoke or other fumes, and is a poor conductor of heat, especially perpendicular to its strata. Mica has good resistance to arc tracking and electrical erosion and is tolerant of most chemical agents, such as solvents, acids, bases and mineral oils. It also has good compressive strength, and behaves well in the presence of tensile and bending stresses.

The fabrication of mica paper for use in tapes for wire insulation, among other applications, is well-known. One fabrication process (a mechanical process) subjects the mineral to the action of a highly pressurized water jet, producing flat particles several µm thick which generally preserve the advantageous physical and chemical properties of the mica mineral. The resulting water slurry is fed to a type of paper machine which casts a continuous sheet of mica paper. Other processes for the delamination of the mica mineral into flat particles include the thermo-chemical and the calcined processes. The resulting aqueous slurry is then treated in the same manner as that produced by the mechanical process.

However, the chemical and mechanical characteristics of such mica papers must be significantly improved before they can be used in industrial applications, especially as wire and cable insulation. This has heretofore normally been done by impregnating the mica paper with a polymeric material (impregnant) and laminating the mica paper to a reinforcement material such as a polymer film or glass fiber cloth to form mica sheets (the terms "mica sheet'' and "mica tape" used herein refer to such impregnated, reinforced mica articles, mica tape generally refers to comparatively narrow strips of mica sheet paper and is normally prepared from mica sheet by well-known slitting techniques). In the mica sheets or tapes of the prior art, the impregnant also generally serves as an adhesive layer, interposed between the mica sheet and a glass fabric or polymer film reinforcement. In the case of the glass fabric, the impregnant normally also penetrates the glass fabric. In these constructions, the impregnation solution can be applied during or after the mica paper and reinforcement layer make contact.

The flexible mica sheets and tapes of the prior art are nearly always characterized by a three-layer structure: a mica paper layer impregnated with a polymer, a reinforcement layer, and an adhesive layer interposed between the impregnated paper and the reinforcement layer. The impregnation polymer and the adhesive layer may be the same or different materials, applied in one or in separate steps. Mica paper impregnation is necessary to prevent water absorption and delamination of the mica particles; impregnation materials are typically thermoset materials such as epoxies or silicones. In order to impregnate the mica paper, the layer may be the same or different materials, applied in one or in separate steps. Mica paper impregnation is necessary to prevent water absorption and dissociation of the mica particles; impregnation materials are typically thermoset materials such as epoxies, silicones, or polyimides. In order to impregnate the mica paper, the impregnation is generally applied as a relatively non-viscous mixture such as a solution of polymer or polymer precursor in a relatively non-polar organic solvent which does not cause delamination of the mica paper. Reinforcement layers include can comprise glass fabric, continuous glass fibers, and a wide variety of polymer films such as polyolefins, polyesters, polyimides and fluoropolymers. When using fabric or fibers as reinforcement, the adhesive layer generally extends into and somewhat surrounds the reinforcement.

The materials, constructions and methods currently known for reinforcing flexible mica paper tapes unfortunately exhibit numerous drawbacks: excessive thickness, stiffness, susceptibility to delamination at high temperatures and/or in solvents, thermal instability, environmental unfriendliness, and surfaces which are not self-sealing and/or to which it is difficult to bond. Thus they are disadvantageous for the fabrication of low cost, lightweight and thin-wall articles such as airframe wire or cable insulations. The prior art teaches the use of mica tape layers tape at least 75 µm thick in all examples claimed to provide high performance fire resistance and 25 µm in the so called "super" thin tapes. Furthermore, reinforcement layers reportedly must be at least 12 µm thick for handling without tearing or wrinkling during the process of laminating to the mica paper. These reinforcement layers are often 25-50 µm thick to provide the tensile strength necessary for tape-wrapping the stiff tapes even on medium-sized conductors. The adhesive layer also contributes significantly to tape thickness due to the somewhat uneven surface of mica paper and the nature of the lamination processes employed for bonding the reinforcement to it.

A consequence of the constructions and methods of fabrication of the prior art mica sheets and tapes is that they are stiff. In wire and cable applications, stiff tapes will not conform to small gauge conductor (e.g. 0.50 mm² is equivalent to 20 American Wire Gauge (20 AWG)) even when high tensions are employed during tape-wrapping. To decrease stiffness, or increase flexibility, one would normally consider the fabrication of thinner tapes. As discussed above, however, this is not possible feasible using known constructions and methods. Glass fabric is frequently used as mica tape reinforcement in part to improve tape flexibility and thus provide better conformity on small gauge wire. This reinforcement, however, is at least 37 µm thick due to overlapping fibers in its construction. Glass fabric has the further disadvantage of providing a very rough or otherwise non-uniform exterior surface when the mica layer is wrapped adjacent to the conductor as is recommended (wrapping the prior art tapes with the mica layer facing outward causes the mica to break or flake off of the tapes). Thus when using glass fabric, to obtain a smooth wire insulation surface, as is always preferred, one must apply a particularly thick polymer over-layer by extrusion or tape-wrapping in order to smooth over the irregular mica tape texture, thereby defeating the objective of providing a small diameter, low weight wire insulation. Another method to provide more flexible mica tapes is to employ silicone polymers for both paper impregnation and as the adhesive layer. Silicone polymers are characterized by the repeating groups
-Si(R₁)(R₂)O- and -Si(R₁)O₂-, the latter group serving to provide crosslinks and therefore insolubility in solvents, where R₁ and R₂ are alkyl and/or aryl groups, preferably methyl or phenyl groups so as to obtain maximum thermal and oxidative stability. While silicone resins provide the most flexible mica tape constructions, even those silicone resins having methyl and phenyl substituents are susceptible to thermal oxidative degradation above 200°C. Oxidative degradation results in a silica (SiO₂)-rich polymer, which is stiffer than the unoxidized silicone polymer. Thus for use in applications exceeding 200°C. silicone resin will continuously oxidize and become even more stiff. If the mica tape contains high amounts of silicone polymer it will eventually result in a wire insulation which is prone to crack upon even relatively slight flexure.

U.S. Patent No. 4,286,010 teaches the combination of mica paper with a glass fabric reinforcement which is bonded with an elastomeric impregnant. i.e. a polybutadiene applied as a toluene solution. This impregnant is applied to both the mica paper and fabric as the two layers contact each other, and the solution simultaneously impregnates the mica paper and encapsulates the fabric to bond the two layers together. The resultant mica sheet or tape thus includes a polybutadiene layer interposed between the mica paper and glass fabric layers. U.S. Patent No. 4,704,322 teaches using epoxy impregnation materials. The impregnation solution is again applied to the mica paper-glass fabric during or after the two layers have made contact, and the construction possesses epoxy on the surface of the mica paper forming a bond to the fabric. U.S. Patent No. 4,707,209 teaches a rigid mica sheet, unsuitable for tape-wrapping, comprising a plurality of mica paper layers which are impregnated with about 5% to 14% by weight of a polysiloxane binder which contains additives to improve resistance to moisture absorption. This laminate does not employ a polymer film or fabric reinforcement. U.S. Patent No. 4,769,276 teaches a mica-coated, electrically insulating and fire-proofing adhesive tape for electrical or optical fiber cable, said tape comprising at least one sheet of mica paper and at least one reinforcement or backing sheet bonded to the mica paper sheet by means of a binder or adhesive, with the binder material being interposed between the mica paper and backing sheet. U.S. Patent No. 5,079,077 teaches an insulating tape for electric wire comprising mica paper, a glass fabric reinforcing layer and a silicone resin adhesive layer coated onto and impregnated into the reinforcing layer. The mica paper is not impregnated in this construction in order to avoid excessively increasing its modulus, but the silicone resin adhesive is again interposed between the mica paper and the fabric to bond the two layers together. European Patent Application No. 059,866 teaches an insulating sheet which comprises mica paper containing up to 9 weight% of a polymer fibril which is melt-bonded to a polymer film or a porous polymer sheet and then impregnated with a resin in a prepreg form to provide the necessary bond between the mica paper and reinforcement layers.

In all of these prior art constructions, an adhesive layer is interposed between the mica paper and a reinforcement layer (e.g.. the a polymer film or glass fabric). This layer may be thin, but it nonetheless adds significantly to the total weight and thickness of the tape, particularly when one is trying to fabricate very thin tapes. This adhesive layer also increases tape stiffness, especially because it is nearly always cured. Furthermore, since nearly all impregnants which can be employed in the manner described in the above-indicated prior art (i.e., the use of an impregnant in solution to bond the mica paper to the reinforcement) are subject to oxidative degradation above 200°C. these prior art mica tapes tend to be unstable above this temperature, becoming brittle and fragile with time. These curing impregnants, used in large quantities in the fabrication of the prior art tapes, are generally applied as hydrocarbon solvent-based systems, and as such they further pose a heavy burden on the environment or waste treatment systems which must be employed for capture of the evaporated solvents.

European Patent Application No. 525,795 teaches the use of fluorinated polyurethane coated onto mica paper as a viscous liquid which is subsequently cured. The polyurethane serves as a reinforcing coating on thin structures of mica or as an adhesive for a multilayer of such structures. The polyurethane is a viscous liquid which does not lend itself to the formation of very thin layers, for example I to 5 µm thick. Also, such viscous materials will not substantially penetrate and bond to the mica paper layer, particularly in the absence of good solvents for the polyurethane. Additionally, the time to cure the polyurethane is quite long (for example 1 hour at 150°C), and utilizing such a coating is therefore unduly time consuming. Such a long cure time does not lend itself to continuous mica sheet or tape production, further increasing manufacturing cost. This method of fabrication and the materials described in this European patent application are therefore very narrowly applicable, and could not, for example, be used to apply reinforcements such as polyethylene or polytetrafluoroethylene films to the mica paper.

It is also known to disperse mica flakes in a polymer, typically via an intermediate slurry or solution stage. Japanese Patent No. 60/253,105 A2 (Inoue) describes wires (which are described as resistant to dielectric breakdown and cut-through) made by coating a conductor with a 28 µm layer of a mixture comprising aromatic polyimide and from 1 to 33% mica particles. In this application the mica is present as a filler, serving to reinforce the polyimide. U.S. Patent No. 3,520,845 teaches electrical insulating sheet material comprising mica flakes individually surrounded by high performance polymer. European Patent Application No. 155,191 teaches a method of forming electrically insulating material in sheet or strip form which comprises the steps of forming a slurry of mica flakes in a hardenable liquid resin, forming a layer of the slurry of a thickness such that there is an overlapping of the mica flakes, and then pressure consolidating the layer so formed. Such composites will be stiff and/or provide insufficient cut-through or other mechanical properties which are necessary for high performance wire and cable due to their inclusion of insufficient quantities of mica since the packing density of mica paper is much greater than that achieved by forming tapes from mixtures of mica and binder.

European Publication No. 770.259, published May 2, 1997, teaches low overlap mica tape wrapped were using multiple layers of glass-cloth backed mica tape. U.S. Patent 3,900,701 teaches a cable with multiple layers of insulation including at least two layers of dielectric material consisting of mica tapes made from mica sheets impregnated with siloxane polymers. U.S. Patent No. 3.823.255 teaches a cable construction comprising an electrical conductor core, a first flame-retardant barrier layer of an inorganic electrical insulating material (e.g. mica tape) which surrounds the conductor, a polymer layer material which covers the first barrier layer, a second flame retardant inorganic barrier layer (e.g. mica tape) which surrounds the first polymer layer and finally a second polymer overlayer. British Application No. 2170646 teaches multiconductor cable spirally wrapped with mica-silicone resin tapes. U.S. Patent No. 4,031,286 teaches an aqueous coating composition comprising a fluorocarbon polymer, colloidal silica and mica particles. U.S. Patent No. 4,079,191 teaches a multi-layer wire insulation system comprising a micaceous insulating layer surrounding the conductor and a separately applied layer of fluoropolymer outer jacket surrounding the micaceous layer. It further teaches that the fluoropolymer outer layer may be applied by extrusion or powder coating. All prior art wires and cables suffer from one or more of the performance shortcomings heretofore identified for the prior art mica tapes which these insulated wires and cables utilize. The prior art mica tapes are susceptible to delamination in solvents due to the use of solvent sensitive impregnation materials to bond the reinforcement to the mica paper. This bonding layer, and the impregnation material in general, will furthermore tend to oxidize and degrade during heat aging even at fairly modest temperatures, to provide a brittle, fragile wire insulation. Additionally, the tapes tend to be thick and relatively stiff, and therefore do not allow the fabrication of very thin, light-weight wire insulations, particularly on small diameter conductors. Finally the methods and materials known for reinforcing the mica tapes for wire and cable insulation using the prior art methods and constructions do not provide sufficiently smooth, thin tapes having appropriate reinforcement materials or surface coatings, for example perfluoropolymers such as polytetrafluoroethylene, which will bond or self-seal to adjacent mica tapes or other wire insulation materials (i.e. extruded or tape-wrapped outer coatings). A strong bond between the mica tape and outer polymer layers is necessary to provide non-wrinkling, strippable, and mechanically tough wire and cable insulations.

Wires fabricated with current types of mica tape are typically constructed with the mica tape layer or layers wrapped adjacent to the conductor, followed by the application of an outer polymer layer by either extrusion or tape-wrapping. The conductors employed are generally medium to large, 0.50 mm² (20 AWG) to 8.0 mm² (8 AWG) as cited for example in U.S. Patent No. 4,079,191 (Robertson) because the mica tapes of the prior art are relatively stiff and therefore cannot easily conform to smaller conductors. Robertson teaches the use of tapes comprising 75 to 130 µm (0.003 to 0.005 inch) thick mica layers having the conventional construction described above (commercial tape from General Electric); this being the mica thickness believed to be necessary in order to obtain the necessary fire-resistance properties. A wire comprising "exceptionally thin" glass-mica tape for use in light weight constructions is described in Hartley, et al., "New Silicone Technologies for Flame Retardant Wire Constructions"; International Wire and Cable Symposium Proceedings, page 567 (1986). The "super-thin" tapes therein described are 75 µm (0.003 inch) thick, and comprise a 25 µm thick mica layer and 50 µm glass fabric as reinforcement. Silicone resin impregnation material impregnates and bonds the mica paper to the reinforcement. Again this wire suffers from the shortcomings described for other prior art wires and cables. Even these "super-thin" "super-thin" tapes are unsuitable for use in the most demanding airframe wire applications requiring thin walls, and low weight.

### SUMMARY OF THE INVENTION

It is readily apparent that the desired performance characteristics for a wire insulation are to a certain extent in conflict, for example, light weight and low thickness tend to be incompatible with high cut-through resistance. Thus, there is a need for a wire and cable construction which comprises multiple insulating layers and which is uniquely superior to current wire constructions in a number of performance characteristics. In particular, it is the object of the present invention to provide a unique wire construction having good strippability, flame resistance, heat stability, cut-through resistance, abrasion strength, solvent resistance, and which comprises materials which are resistant to both hydrolysis and arc-tracking. In addition, a wire construction providing these advantages without requiring a thick and/or heavy layer of insulation is highly desirable.

There is a further need for unique mica sheet and tape articles and methods for their fabrication which are thinner to reduce weight and size, more flexible to conform to a variety of substrates (especially small diameter wire), provide improved thermal performance, resist delamination during exposure to solvents or heat, and can be fabricated using more environmentally friendly processes. It would also be valuable to provide mica sheets or tapes and methods for their fabrication comprising materials which are self-sealing or otherwise allow bonding of the mica tapes to themselves and to a variety of other materials employed in wire insulation, for example to a tape-wrapped or extruded outer polymer layer, in order to meet a variety of important handling and performance requirements.

The invention comprises a tape comprising: (a) a mica paper core, the mica paper having been impregnated with from 2 to 30 weight % based an the pre-impregnation weight of the paper of a silicone polymer impregnant, and (b) a fluoropolymer directly deposited from a liquid dispersion, preferably an aqueous dispersion, on both sides of the impregnated mica paper.

This invention further provides an insulated electrical conductor comprising an elongate electrical conductor; an electrical insulation surrounding the conductor, said insulation comprising: an inner, electrically insulating layer that surrounds and is in direct physical contact with the conductor, the inner layer comprising a wrapped, coated mica tape layer as previously described; and an extruded or tape-wrapped polymeric, outer electrically insulating layer that surrounds and is in direct physical contact with the inner micaceous layer. Multiple layer constructions of the aforementioned type are also contemplated by the present invention. Therefore, in a second aspect, the invention provides an insulated electrical conductor comprising:
(a) an elongate electrical conductor, and
(b) electrical insulation surrounding the conductor, said insulation comprising
   (i) a coated mica tape inner layer that surrounds the conductor, said coated mica tape containing from 2 to 30 weight percent of a silicone polymer impregnant and being coated on both sides with a fluoropolymer layer deposited from a liquid dispersion thereof; and
   (ii) a polymeric outer electrically insulating layer that surrounds the coated mica tape layer.

In addition, the invention comprises a novel method of fabricating this mica sheet or tape article. As used herein, the term impregnated mica refers to the impregnated mica prior to application of the dispersion applied polymer layer. After application of this polymer layer, the mica of the present invention will be referred to as "coated" mica. This coated tape is then calendered to achieve the desired smooth surface.

### BRIEF DESCRIPTION OF THE DRAWINGS

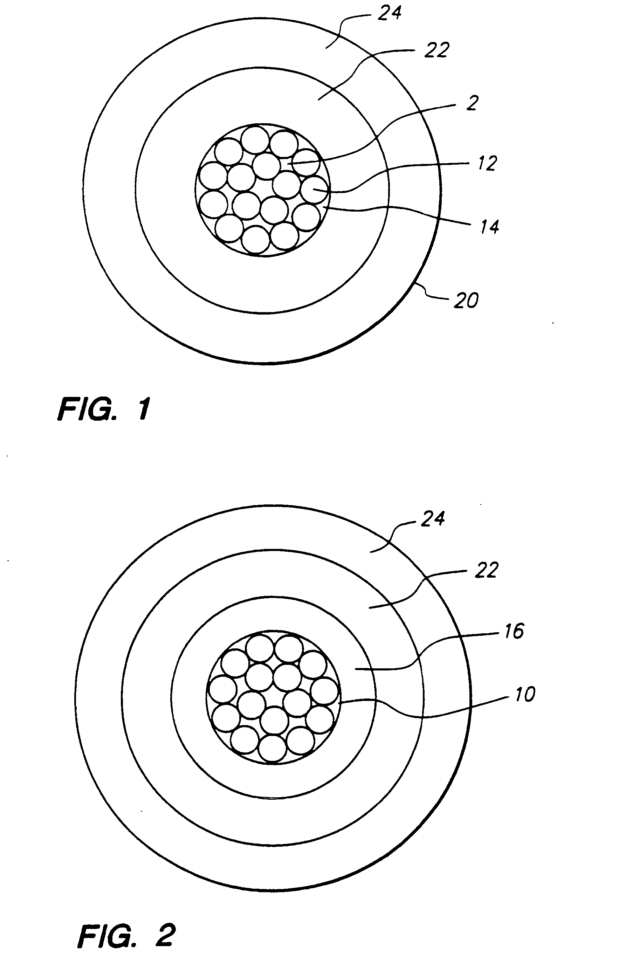

The invention is illustrated by the drawings in which Figure 1 is a cross-section of a first embodiment of the insulated electrical conductor of this invention;
Figure 2 is a second embodiment of the insulated electrical conductor of this invention having a polymer layer interposed between the coated mica tape layer and the conductor,
Figure 3 is a third embodiment of the insulated electrical conductor of this invention comprising a polymer layer interposed between two layers of coated mica tape;
Figure 4 is a first embodiment of the coated mica sheet or tape of the invention having a polymer layer coating applied to one side only of the impregnated mica paper;
Figure 5 is a second embodiment of the coated mica tape of the invention comprising a polymer coating on both the top and bottom surfaces of the impregnated mica paper;
Figure 6 is a third embodiment of the coated mica tape of the invention comprising two polymer layers (which may be the same or different) applied to both the top and bottom surfaces of the impregnated mica paper:
Figure 7 is a fourth embodiment of the coated mica tape of the present invention comprising three polymer layers (the same or different polymer) applied to each surface of the impregnated mica paper, and
Figure 8 is another embodiment of the coated mica tape of the invention comprising a yarn layer interposed between two polymer layers.

### DETAILED DESCRIPTION OF THE INVENTION

Referring to the Figures, where like numerals denote like elements of the insulated electrical conductor of this invention, FIG. 1 is a front-view cross-section through the insulated electrical conductor of a first embodiment of this invention. The insulated wire 20 comprises an elongated electrical conductor 10, shown as strands of metal wire 12 each with a metal plating 14. Electrical conductor 10 may alternatively be a solid wire rather than the stranded wire shown, but stranded wire is generally preferred in applications where vibration is a factor, such as in aerospace applications. Both solid and stranded wire of various metals may suitably be insulated using the coated mica tape of the present invention.

The electrical conductor 10 is typically of copper, but may be of copper alloy, aluminum, or other conductive metals. If the metal wire is of copper or a copper alloy, it is typically plated with a metal plating 14 to protect the copper from oxidation effects, and to improve the solderability of the conductor, although unplated copper or copper alloy wire is also suitable for use as the electrical conductor of this invention. Typical metal platings 14 are of tin, silver, nickel, or other commonly employed plating metals. Such platings are typically produced by electroplating a uniform thickness of high purity metal to the individual wires comprising the strand.

Stranded copper wire is available in several configurations. The wire may have a unilay construction, where a central core is surrounded by one or more layers of helically wound strands in the same lay direction and same lay length; may be constructed with concentric stranding where a central core is surrounded by one or more layers of helically wound strands in alternating lay directions and increasing lay length; or may be constructed with unidirectional concentric stranding where a central core is surrounded by one or more layers of helically wound strands in the same lay direction and increasing lay length.

Such stranded copper wires are readily available from numerous commercial sources. For example, Hudson International Conductors, Ossining, New York, supplies a unilay stranded copper wire consisting of nineteen strands of 200 µm diameter (32 AWG) copper, each individually coated with an electroplated layer of tin. Such a 19/32 AWG stranded wire has a nominal outside diameter of approximately 950 µm, and has an equivalent conductor diameter of 813 µm (20 AWG), i.e. it is regarded as the effective equivalent of an 813 µm diameter (20 AWG) solid copper wire.

The electrical conductor 10 is surrounded by a two-layer electrical insulation 20. The inner electrically insulating layer 22 of this first embodiment immediately surrounds the electrical conductor and comprises a wrapped coated mica tape in accordance with the present invention which will be described in greater detail later in this application. The coated mica tape layer 22 is itself surrounded by an extruded or tape-wrapped polymeric outer electrical insulating layer 24 which will also be hereinafter described in greater detail.

In the first embodiment, the coated mica tape forming the inner electrically insulating layer 22 is wrapped over the electrical conductor 10 by a process known to those of ordinary skill in the art. Standard tape-wrapping machines are commercially available, for example from companies such as United States Machinery Corporation, North Billerica, Massachusetts, or E.J.R. Engineering and Machine Company Incorporated, Lowell, Massachusetts; and the techniques of using these or like machines to wrap an electrical conductor with an insulating tape are well known.

The inner layer 22 may consist of one or a plurality of layers of coated mica tape. To provide a single tape layer, the tape is wrapped with approximately 0% overlay, i.e. "butt-wrapped". In butt-wrapping, however, small gaps between adjacent wraps of tape are inevitable in a production manufacturing environment. It is thus preferred to provide at least two coated mica tape layers which can be obtained using an overlap of approximately 50%, or alternatively, by applying two tapes, each of which is butt-wrapped. In the case of two layers of butt-wrapped tapes, the second butt-wrapped tape layer should be wrapped such that it largely covers the small gaps which may occur between the adjacent wraps of the innermost first tape layer. The two-layer butt-wrapped construction will provide a smoother finished wire surface contour, particularly in conjunction with an extruded outer layer, but the extent of overlap is not a critical feature of this invention. If desired, further layers of coated mica tape can also be applied to provide improved mechanical strength to the wire, e.g. greater cut-through resistance.

To provide a bond between wrapped layers of coated mica tape, at least one surface of the coated mica tape preferably comprises a thermoplastic polymer coating as thin as 1 µm; more preferably both surfaces of the tape are coated with a thermoplastic polymer coating with the mica paper layer being sandwiched therebetween. Thus when this tape polymer coating layer reaches its melt temperature it will function as an adhesive and the coated tape will bond or self-seal to an adjacent layer, for example another mica tape layer or to the outer extruded or tape-wrapped layer 24. To obtain satisfactory bonding between two coated mica tape layers, the tapes should have a relatively smooth surface and be in intimate contact. This is readily achieved by employing sufficient tension during the tape-wrapping step. It may also be useful to heat the inner layer 22 immediately prior to application of the outer layer 24, as an in-line process. Any suitable furnace which will provide the necessary temperature to the bond area will do (e.g. an induction, infrared or forced air oven). It is desirable that the coating polymer on the mica paper be compatible with the outer insulating layer 24, as hereinafter described, and also with the coating layer of a differently coated mica tape if a second such tape having a different polymer as a coating is also applied over the first tape layer.

The outer electrically insulating layer 24 may comprise any polymer which may be suitably applied by extrusion and/or tape-wrapping. Suitable materials for the outer electrically insulating layer 24 include for example polyethylenes, polyethylene copolymers, and fluoropolymers (e.g. poly(vinylidenefluoride) (PVDF), poly(ethylene-co-tetrafluoro-ethylene) (ETFE), poly(chlorotrifluoroethylene) (CTFE), poly(hexafluoropropylene-co-tetrafluoroethylene) (FEP), poly(perfluoropropylvinylether-co-tetrafluoroethylene) (PFA), poly(perfluoromethylvinylether-co-tetrafluoroethylene) (MFA), and polytetrafluoroethylene (PTFE)). For the purpose of providing a wire which is most resistant to hydrolysis and/or arc-tracking, the use of highly aromatic polymers such as polyesters (e.g. poly(ethylene-co-terepthalate) (PET), poly(butylene-co-terepthalate) (PBT) and poly(ethylene-co-napthalate) (PEN)), and polyimides, is not preferred for aerospace wire and cable, but is appropriate for some applications. In terms of providing a wire which is particularly advantageous for use in aerospace applications the most preferred polymers for use in outer layer 24 are PFA, MFA, or ETFE, especially radiation cross-linked ETFE.

The materials of the outer layer 24 have been described by reference to their primary polymeric constituents, and it should be appreciated that they may also contain other constituents such as are conventional in the polymer formulation art; for example, antioxidants, UV stabilizers, pigments or other coloring or opacifying agents (such as titanium dioxide), prorads (radiation enhancing agents) to promote radiation crosslinking, flame retardants, additives to promote marking, and the like. Outer layer 24 may also comprise more than one layer, for example a thin outermost polymer layer which contains additives to promote marking or provide a particular color, while the bulk of the underlying outer layer 24 will not contain some or all of these additives.

The coated mica tape and outer layers, layers 22 and 24, respectively, which together comprise the wire insulation may be applied in one or in separate operations depending upon the relative line speeds suitable for each. If the outer layer 24 is tape-wrapped, then a one-step operation to apply both layers 22 and 24 is feasible. If the outer layer is applied by extrusion, which typically runs at 10 to 100-fold the line speeds of tape-wrapping, then separate processing steps for applying layers 22 and 24 is generally preferred.

A second embodiment of the invention is shown in FIG. 2 in which an inner polymer layer 16 is located between the conductor 10 and the coated mica tape layer 22. This inner layer 16 may be applied by conventional methods such as powder coating, tape-wrapping or extrusion. Inner layer 16 may provide a greater degree of control over wire handling and installation properties such as insulation strip force and/or shrink-back. Suitable polymers include polyethylenes, polyethylene copolymers, and fluoropolymers (e.g. PVDF. ETFE, CTFE, FEP, PFA, MFA, and PTFE).

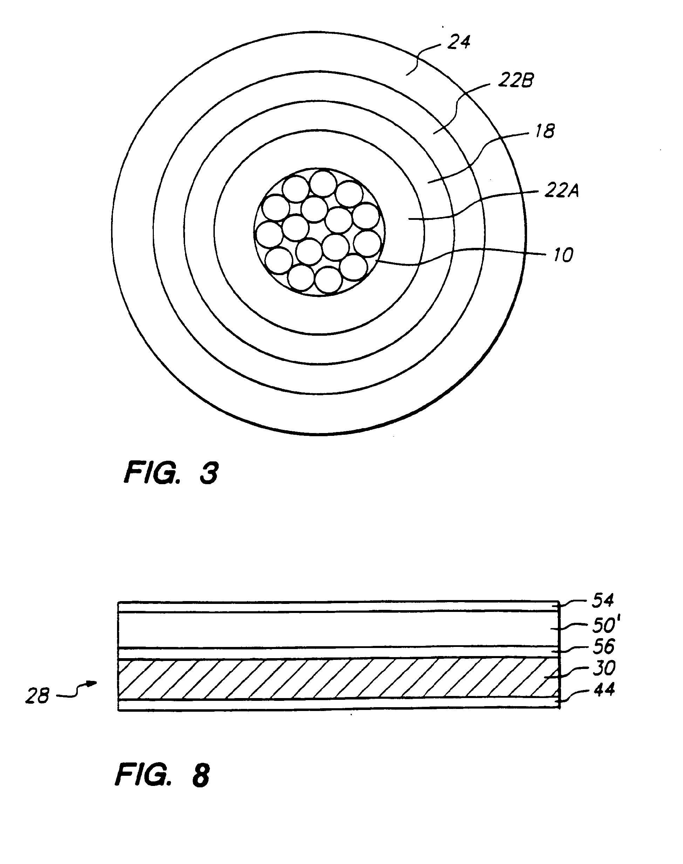

A third embodiment of the invention is presented in FIG. 3 in which a polymer layer 18 is located between two coated mica tape layers 22A and 22B. In this embodiment, it is necessary to apply the two layers 22A and 22B with a butt wrap. Polymer layer 18 generally provides an improved adhesive bond between layers 22A and 22B, thereby improving desired performance properties such as wrinkling and abrasion resistance. It is seen from this embodiment that the mica tape layer shown in the various embodiments may include a layer or layers which do not comprise coated mica paper. In this and other embodiments of the invention, layer 22 is intended to denote the layer which comprises at least one coated mica paper layer, and it is located nearer to the conductor than outer layer 24.

Other embodiments of the invention comprising multiple mica coated tape and/or polymer layers are of course conceivable, and are included within the scope of the present invention.

The coated mica tape per se, and also its method of fabrication, used in layer 22 as shown in the illustrative embodiments of the present invention, are both novel. This coated mica paper sheet is fabricated as follows: mica paper is first impregnated with an oligomer (polymer precursor) or polymer solution, the solvent is evaporated and the oligomer impregnant is cured to provide sufficient structural integrity to permit further processing. The impregnated paper is then coated with a solvent dispersion of a polymer or mixture of polymers as hereinafter described. Commercial mica paper having a thickness of up to 75 µm, preferably less than 50 µm, most preferably less than 35 µm, is suitable. Suitable paper, for example, is sold under the trade name Cogemica™ by Cogebi, of Belgium. The paper may be formed from any of the known naturally occurring or synthetic micas as heretofore described, employing equipment and techniques known to those skilled in the art

The mica paper is impregnated with a monomer, oligomer or polymer normally in a nonaqueous solvent to provide a paper which is dimensionally stable, can be handled in subsequent processing steps without tearing, and has the required performance characteristics, especially moisture resistance. The polymers currently used for mica paper impregnation are suitable, as are other polymers, provided they can be applied to the paper as a solution which itself does not damage the mica paper. Suitable solvents include relatively non-polar liquids such as higher alcohols, ketones, and aliphatic and aromatic hydrocarbons, and mixtures thereof, for example. Impregnation polymers may be thermosets (or precursors thereof) or thermoplastics. To obtain a thermoset impregnant, one applies a solution of the monomer or oligomer precursor of the thermoset polymer, for example polymer precursor solutions of silicones. These polymer precursor solutions are well-known for mica paper impregnation, for example the silicone precursor solutions sold as Wacker K™ (Wacker GmbH). Also suitable are polymer impregnants such as silicone elastomers which form solutions in suitable solvents. For high temperature applications, silicone precursor thermosets are the preferred impregnants. In particular, the methyl and phenyl substituted silicone polymers, -Si(R₁)(R₂)-O-, where R₁ and R₂ are methyl or phenyl groups, provide excellent thermal stability and arc track resistance.

The impregnant polymer solution may be applied by any of a variety of methods, for example by dip, kiss, contact, or spray coating or vacuum impregnation . After applying the polymer solution, the solvent is evaporated, normally at a temperature greater than its boiling point, and for thermosetting impregnants, a higher temperature heat treatment may be necessary to complete the crosslinking reaction and obtain optimal mechanical strength. Using dimethylsilicone polymer impregnant as an example, from 2 to 30% by weight of impregnant may be applied to the mica paper (as percent initial mica paper weight) to provide the required dimensional stability and strength to the impregnated paper to prepare it for the subsequent step of coating. More preferably the mica paper is impregnated with from 3 to 15% by weight of dimethylsilicone polymer containing functional groups suitable for catalytic and/or heat initiated cross-linking. Relatively low levels of impregnation polymer are surprisingly effective at providing the mica paper with the solvent resistance necessary for the subsequent step of coating with liquid (preferably aqueous) polymer dispersions. The use of lower levels of polymer impregnation provides several advantages. First, the resultant impregnated mica tape is less prone to stiffening due to oxidation of the impregnant when exposed to high use temperatures; hence it is less prone to fraying or cracking, which may expose the conductor. Second, the reduced level of impregnant affords a mica tape that, although solvent stable, is still sufficiently porous to provide a remarkably strong bond to the subsequently applied coating which is applied as a polymer dispersion in water or other liquid dispersion medium. The dispersed polymer particles are able to interpenetrate the surface of the mica paper to form a strongly adherent bond. Previous techniques required use of an intermediate adhesive layer to bond the mica paper to a polymer or glass fiber reinforcing layer, or employed a viscous coating which is subsequently cured on the surface of the mica paper. The coated mica tape of the present invention does not require any such adhesive layer or cured coating, thereby resulting in a tape that has outstanding thermal stability and solvent resistance when employing suitable solvent dispersible polymers such as perfluoropolymers, while at the same time being thinner and more flexible than known tapes. The optimum range of impregnation loading using polymers other than dimethylsilicone may be different but will normally be within the above-indicated 2 to 30% by weight loading range.

The impregnated mica tape is coated on both sides with a dispersion of polymer in a carrier liquid. To our knowledge, this liquid dispersion coating technique has not heretofore been utilized with mica paper. This process involves applying the polymer dispersion directly onto the impregnated mica paper, evaporating off the carrier liquid in a drying step, and then sintering the polymer above its melting temperature to provide a contiguous polymer film on the paper. The most common (and environmentally friendly) dispersions of polymer are water-based, i.e., aqueous dispersions. The polymer particles in these dispersions are typically in the range 10 to 500 nanometers in diameter. Examples of suitable, commercially available aqueous dispersions are PTFE 30B™ and FEP 121A™ (both from DuPont). A wide variety of commercially available polymer latexes are also suitable. Suitable aqueous dispersions normally comprise 40 to 60% polymer, 3 to 10% of a surfactant to stabilize the dispersion (i.e., prevent premature settling), and water. Although water based dispersions are common and most environmentally friendly, other dispersions, for example alcohol dispersions, are also suitable for the present invention. The polymer dispersion may be applied to the impregnated mica paper by methods similar to those used for applying the impregnation polymer. Care must be taken to provide films obtained from polymer dispersions of uniform thickness on the mica paper surface during casting, however, in order to obtain uniform polymer coating thicknesses after drying and sintering. This can be achieved by drawing the mica paper sheet vertically during and immediately after applying the dispersion until the dispersing liquid has been substantially removed and material flow thus prevented. The dispersing liquid is normally removed at a temperature greater than its boiling point, and the deposited polymer is sintered above its melting temperature to fuse the individual particles into a contiguous, substantially non-porous film. The steps of applying the dispersion, drying, and sintering the polymer on the impregnated mica sheet are conveniently done in a single, continuous process.

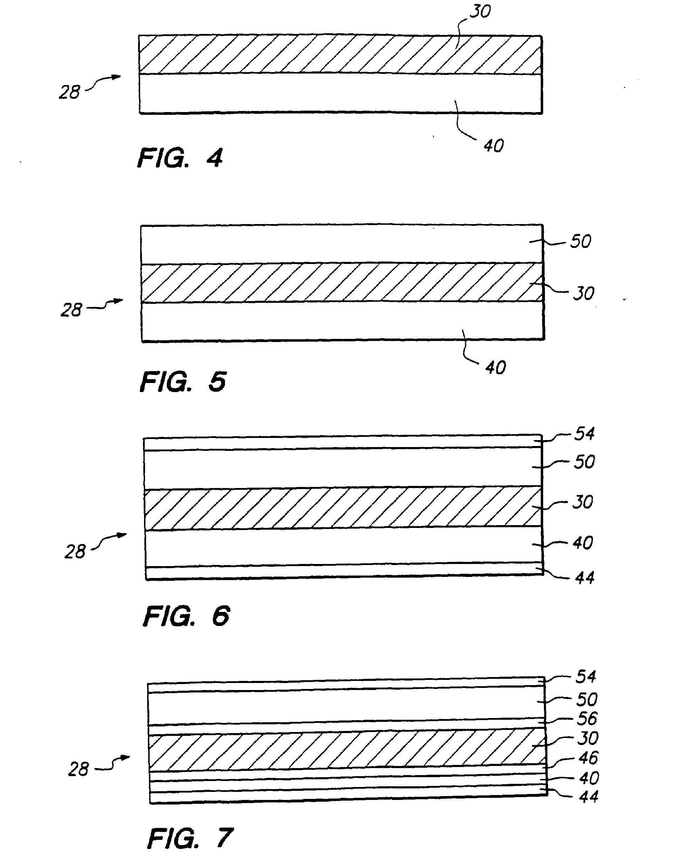

One or more polymer layers may be applied sequentially to the impregnated mica paper. In FIG. 4 is shown a first embodiment of the coated mica sheet or tape 28 of the present invention consisting of two layers: an impregnated mica paper 30 and a single polymer coating 40 obtained by the application of a polymer dispersion. Polymer coating 40 may be obtained in a single coating step, or from multiple steps using the same dispersion. To avoid cracks in the polymer coating 40 (sometimes referred to as "mudcracks"), it is desirable to limit the thickness of the applied film to from 5 to 25 µm (the actual maximum thickness depends upon the particular dispersing liquid, polymer concentration and polymer in the dispersion). Thus if one desires a polymer layer 40 having a thickness greater than 25 µm, it is convenient to sequentially apply more than one coating. In FIG. 5 is presented a second embodiment of coated mica sheet or tape 28 consisting of three layers: impregnated mica paper 30, polymer coating 40 on one side of the mica paper, and a second polymer coating 50 on the other side of the paper. Polymer coatings 40 and 50 may be of the same polymer or different, and may be applied in one coating step or in multiple steps.

A third embodiment of this coated mica sheet or tape is the five-layer construction illustrated in FIG. 6. In this case an additional thin polymer coating 44 and 54 is applied to polymer layers 40 and 50, respectively. Polymer layers 44 and 54 are distinguished from layers 40 and 50, respectively, by chemical composition and/or molecular weight. Layers 44 and 54 may be alternatively an adhesive layer which promotes adhesion between two sheets or tapes, or to another material to which the sheet or tape is to be bonded.

A fourth embodiment of the present sheet or tape invention is presented in FIG. 7. This is a seven-layer construction having thin polymer layers 46 and 56 cast directly onto the two faces of the impregnated mica paper. On polymer layer 46 is cast a further thin polymer layer 40, and on polymer layer 56 is cast a layer 50 of greater thickness than polymer layer 40. Finally, additional thin layers 44 and 54 are cast on top of layers 40 and 50. Layers 46 and 56 may, for example, promote adhesion between mica layer 30 and layers 40 and 50. A variety of other embodiments are possible, all of which are included within the scope of the present invention, for example a seven-layer construction with layers 40 and 50 being of equal thickness.

Fillers, additives and reinforcements may be included in one or more of the polymer layers. Fillers include infusible polymer particles and/or inorganic particles such as clays, glass spheres, glass fibers, and fumed silica, among others. Additives which may be present in the polymer layers include antioxidants, UV stabilizers, pigments or other coloring or opacifying agents (such as titanium dioxide), prorads (additives to promote radiation crosslinking), and flame retardants. One may also include in one or more of the polymer layers continuous fibers, for example glass fibers or yarns, oriented polymer fibers, or glass fabrics.

FIG'. 8 shows another embodiment of the invention in which a yarn layer 50' is positioned between two fluoropolymer layers of nonsymmetric thickness 54. 56.

### EXAMPLE 1

Commercial mica paper (Cogemica™, Cogebi). 15 µµm thick, 30 cm width and 100 m length, and having an initial tensile strength of 2.3 N/cm, was impregnated with either a dimethyl or phenylmethyl silicone oligomer solution in toluene (both 50 wt% solutions as purchased; Wacker K). The silicone oligomer solutions were applied by kiss-coating to one side of the mica paper after dilution with toluene to the desired concentration as indicated in Table 1. The toluene was evaporated at 150°C/30 seconds, which also induces polymerization. The weight percent silicone polymer present in the impregnated mica paper was determined by extraction with refluxing KOH solution. Also in Table 1 are summarized the tensile strengths and water absorption characteristics for several samples prepared using two different concentrations of both dimethyl and phenylmethyl silicone oligomer solutions. It is evident that small amounts of silicone resin impregnation, as little as 4% by weight for Sample 3, impart very good water resistance. In contrast, the untreated mica paper disintegrates virtually immediately upon contact with water. A further important and surprising result is the remarkable increase in tensile strength for impregnated mica paper at all loadings using silicone oligomer materials. For example, only 4% dimethyl silicone (Sample 3) provides an 8-fold increase in this property. Increased tensile strength provides a mica tape which can, for example, be wrapped at greater tensions. Tape tension is important for a robust tape-wrapping process and control of important wire properties such as strip force and tape-tape adhesion.

**Table 1**

| Sample | Silicone Type | Silicone solution concentration | Measured silicone in impregnated paper | Tensile Strength (N/cm) | Water Absorption |
|---|---|---|---|---|---|
| 1 | n.a. | no treatment | n.a. | 2.3 | disintegration |
| 2 | dimethyl | 25% | 15% | 24.0 | 0.4% |
| 3 | dimethyl | 10% | 4% | 19.0 | 1.2% |
| 4 | methylphenyl | 15% | 20% | 18.7 | --- |
| 5 | methylphenyl | 6% | 8% | 13.8 | --- |

### EXAMPLE 2

Polymer was cast from aqueous dispersions directly onto the impregnated mica paper of Sample 2 in Example 1 to provide the five-layered construction of coated mica tape 28 as illustrated in FIG. 6: a central impregnated mica tape layer, PTFE bonded to each side of the mica paper, and a top layer of FEP/PTFE. Each polymer dispersion layer was cast onto the impregnated mica paper in separate steps. An aqueous dispersion of PTFE 30B (60% polymer solids; DuPont Corporation), to which had been added 1% Zonyl FSN™ surfactant (DuPont Corporation) to promote wetting on perfluoropolymer substrates, was coated onto the impregnated mica paper by kiss coating. The water was removed from this dispersion by heating (150°C/30 seconds) and the PTFE sintered (370°C/30 seconds) to provide an 11 µm thick PTFE layer; the kiss coating, drying and sintering steps were done in series in one continuous process. An 11 µm coating of PTFE was then applied to the opposite side of the mica paper in an identical manner. Topcoat layers, each 2 µm thick, were prepared from a 1:1 mixture of PTFE 30B/FEP 120A aqueous dispersion mixture (DuPont Corporation) which was applied, dried and sintered under the same conditions. The finished five-layered coated mica tape had a total thickness of 42 µm and a tensile strength of 29 N/cm.

### EXAMPLE 3

The impregnated mica paper of Sample 3 in Example 1 was coated sequentially with several different aqueous polymer dispersions to provide a seven-layered construction similar to that in FIG. 7, but having similar polymer thicknesses on each side of the coated mica paper. The two layers bonded directly to the two surfaces of mica paper were cast in one dip coating step from the 1:1 PTFE 30B/FEP 120A mixture used in Example 2; each of these coatings was 2 µm thick. This was followed by application of 3 µm of PTFE 30B (with Zonyl FSN dispersant) to each surface in two separate steps. Finally, 2 µm thick topcoats were cast from the 1:1 PTFE 30B/FEP 120A mixture to provide a finished coated mica tape having a total thickness of 28 µm and a tensile strength of 11 N/cm.

### EXAMPLE 4

Mica sheets reinforced with glass yarn, 30 cm wide and 100 m long, were prepared as illustrated in Figure 8 from commercial mica papers with two thicknesses: 15 µm and 20 µm. The mica papers were impregnated as for Sample 3 in Example 1, then coated on each surface with 2 µm of a 1:1 mixture of PTFE 30B/FEP 120A. Glass yarn (Owens-Coming; D1800 1/0 1.OZ 620-1 7636) was applied to one surface of mica sheets during the application of a 10 µm layer of PTFE 30B layer. The glass yarns were continuously fed onto the PTFE aqueous dispersion layer (wet) then immediately dried and sintered as above. Mica sheet samples having yarn densities of 1 and 2 yarns/mm width (1.0 and 0.5 mm spacings) were produced. A final 2 µm thick topcoat of the 1:1 mixture of PTFE 30B/FEP 120A was applied over the layer comprising the glass yam. The tensile strengths of these four tapes are presented in Table 2. Oasis™ tape, a Dupont Corporation product, is used to construct commercial composite airframe wire. This tape comprises a 16 µm polyimide layer coated with PTFE and FEP on both surfaces. The inclusion of 1 yarn/mm width increases the tensile strength triples the tensile strength; and 2 yarns/mm provides a greater strength than provided by commercial Oasis tape.

**Table 2**

| Tape Sample | Yarns/mm | Mica Paper thickness (µm) | Tape Thickness (µm) | Tensile Strength (N/cm) |
|---|---|---|---|---|
| Example 3 | 0 | 15 | 28 | 11 |
| Example 4a | 1 | 15 | 44 | 33 |
| Example 4b | 2 | 15 | 44 | 67 |
| Example 4c | 1 | 20 | 50 | 27 |
| Example 4d | 2 | 20 | 50 | 71 |
| Oasis™ Tape | n.a. | 16(polyimide) | 30 | 54 |

### EXAMPLE 5

A mica tape was constructed using the prior art method of fabrication involving the lamination of a thin polymer film to a silicone impregnated mica paper. This allowed a comparison of the solvent and thermal aging characteristics of thin tapes prepared using prior art constructions and methods to the properties obtained with the coated mica tape constructions and methods of the present invention. One side of the impregnated mica paper prepared as for Sample 2 of Example 1 (20 µm thick after impregnation) was kiss-coated with a 5 µm thick layer of 1:1 PTFE 30B/FEP 120A aqueous dispersion mixture. The other side of the paper was kiss coated with a 5 µm thick layer of phenylmethyl silicone resin (25% solution in toluene) which was then dried at 150°C/30 sec to provide a tacky surface. To this was laminated a 19 µm thick PTFE film (DF1700 film: Chemfab Corporation) using a two-roll calender, followed by an oven heat cure (300°C/ 2 min). The PTFE surface of this DF1700 film in contact with the silicone layer on the impregnated mica paper was coated with 1 µm FEP which promotes adhesion.

The performance of this Example 5 tape, prepared by the prior art lamination method, was compared to a coated mica tape of the present invention (as described in Example 3) for both resistance to Skydrol® 500B (Monsanto; a common aerospace hydraulic fluid) at 22°C and for thermal aging at 320°C. Results are presented in Table 3. First, note that despite employing thin mica paper and thin polymer film as starting materials, the prior art tape fabrication method and construction provided a tape having a thickness of 49 µm; 21 µm thicker than the coated mica tape of the present invention as compared in this example. Reducing the prior art tape thickness by employing a thinner PTFE reinforcing film is not practical because thinner film is substantially more expensive and difficult to handle as it is prone to wrinkling and tearing. Second, the excellent resistance of the coated mica tape of the present invention to Skydrol 500B, and the inferiority of the tape prepared by the prior art lamination method, is evident from the present invention's low weight gain and resistance to delamination. This very desirable behavior is obtained because the methods and constructions of the coated mica tape or sheet of the present invention do not employ an adhesive coating interposed between the polymer reinforcement layer and the impregnated mica paper. Third, the coated mica tape of the present invention does not degrade after heat aging 5 days at 320°C, while the prior art tape discolors, embrittles, and finally delaminates in the oven. The discoloration, embrittlement and delamination of the prior art tape are a direct result of the thermal degradation of the silicone adhesive.

**Table 3**

| Sample | Tape Thickness (µm) | After Skydrol 500B (3 days/22°C) | After 2 days/ 320°C | After 5 days/ 320°C |
|---|---|---|---|---|
| Present Invention (Example 3) | 28 | 4.9% wt gain; intact | no change (silver color, flexible) | no change |
| Prior Art Laminate (Example 5) | 49 | 11.0% wt gain; delamination | light brown color; brittle | delamination of PTFE film |

### EXAMPLE 6

Wire samples (0.35 mm² (20 AWG), nickel plated 19-strand copper conductor) were prepared for measurement of mechanical properties and comparison to the performance of other wires used for airframe wire. In Table 4 are summarized the wire constructions prepared. Samples 1-5 are constructed with a 50% overlap layer of mica tape adjacent to the conductor. The outer layer for these five samples is either three layers of 50% overlapped PTFE tape (Garlock™ tape; NEO-LP-white 3579; 1.5 mil thick, ¼ inch width, unsintered, laser markable tape; Coltec Industries) or extruded PFA 450 (Dupont Corporation). The inner mica tape was heated at 25 ft/min in an oven set at 700°C to seal to itself prior to the application of the outer insulation layer. The PTFE tape used as an outer layer was sintered after the first two layers were wrapped and after the third was applied. Spec 55™ wire is a commercial wire (Raychem Wire and Cable, SSPC0213-20-9) comprised of crosslinked ETFE. The composite wire is a commercial product (Tensolite, BMS 13-60-1/1-20) prepared from one 50% overlapped Oasis tape and a PTFE tape outer layer.

The mechanical performance of these wires is compared in Table 4 for cut-through force at room temperature (RT) and 260°C (per Boeing Material Specification, BMS 13-60, using a 5 mil radius blade), wire-wire abrasion (per BMS 13-60), and scrape testing (5 mil radius blade, 5 cm stroke length, 30 strokes/minute). Wire samples 1 to 5 comprising the mica tape layer all provide 3-fold or more cut-through force at RT compared to the PFA 450 wire sample, demonstrating the value of mica for this property. Similarly, for these five mica tape wire samples, the cut-through force measured at 260°C was ten-fold or more greater than for both the PFA 450 and Spec 55 wire samples. The industry target for this property is 50 N. A comparison of wire samples 4 and 5 with the PFA 450 sample in wire-wire abrasion further illustrates the benefit of mica tape: cycles increase by 7-10-fold when the mica tape in employed. Finally, the improvement in scrapes using mica tape is good to excellent and seen from a comparison for wire samples 3 to 5 and the composite wire sample. With PFA 450 as the outer layer (samples 4 and 5), scrapes were good; when PTFE tape was employed as the outer layer (sample 3), scrapes were very good.

**Table 4**

| Wire Sample | Mica Tape Sample | Outer Layer | Total Wall (µm) | Cut-through Force (N) (RT) | Cut-through Force (N) (260 C) | Wire-Wire (cycles) | Scrape |
|---|---|---|---|---|---|---|---|
| 1 | Example 3 | PTFE | 225 | 123 | 49 | >4,000,000 | |
| 2 | Example 4a | PTFE | 225 | 134 | 62 | >4,000,000 | |
| 3 | Example 4b | PTFE | 225 | 152 | 75 | >4,000,000 | 860 |
| 4 | Example 4c | PFA 450 | 300 | 164 | 50 | 1,400,000 | 166 |
| 5 | Example 4d | PFA 450 | 300 | 186 | 80 | 2,100,000 | 114 |
| PFA 450 | --- | --- | 200 | 36 | 5 | 200,000 | 75 |
| Spec 55 | --- | --- | 200 | 207 | 7 | 2,300,000 | 140 |
| Composite | Oasis | PTFE tape | 225 | 156 | 152 | >4,000,000 | 175 |

### EXAMPLE 7

The 28 µm thick coated mica tape of Example 3 was compared for performance in a dry arc-tracking test to a 30 µm thick commercial polyimide tape jacket in a thin-wall wire construction. Nickel-plated, 0.50 mm² (20 AWG) 19-strand conductor was wrapped with the coated mica tape of Example 3 and the 30 µm thick, 6 mm wide polyimide tape (Oasis™ tape; DuPont Corporation). The overlap for both constructions was 50%. The Oasis tape comprises 16 µm polyimide coated on one side with 4 µm PTFE and FEP, and on the other side with 10 µm PTFE and FEP. Over the coated mica tape and the Oasis tape samples was wrapped one layer of 38 µm thick, 6 mm wide unsintered PTFE tape (PTFE T613; Coltec Industries) with 50% overlap. Each sample was heated in a furnace at 850°C for 30 sec to sinter the PTFE tape and fuse all of the tapes together; this provided two wire samples each having an insulation wall thickness of 57 µm. Both samples were tested for dry arc-tracking resistance using the procedure described in Boeing Standard BMS 13-60, and the results are summarized in Table 5. The thin covering of PTFE tape employed in these two constructions, thinner than is generally employed in commercial wire constructions, renders both the mica tape and Oasis tape somewhat more susceptible to arc-tracking. This accentuates the differences between the two tape constructions, and simulates the condition, for example, in which the outer polymer layer of a wire insulation has been torn or worn away by damage or wear. The wire constructed with Oasis tape performs significantly more poorly in this test because polyimide is inherently susceptible to arc-tracking, while mica is not.

**Table 5**

| Sample | Wires Passed / Wires Tested |
|---|---|
| Mica Tape/PTFE Sample | 46 Pass / 50 Total |
| Oasis Tape/PTFE Sample | 25 Pass / 50 Total |

## Claims

1. A tape comprising:
(a) a mica paper core, the mica paper having been impregnated with from 2 to 30 weight % based on the pre-impregnation weight of the paper of a silicone polymer impregnant, and
(b) a fluoropolymer directly deposited from a liquid dispersion on both sides of the impregnated mica paper.

2. An insulated electrical conductor comprising:
(a) an elongate electrical conductor, and
(b) electrical insulation surrounding the conductor, said insulation comprising
(i) the tape of claim 1 as an inner layer that surrounds the conductor, thereof ; and
(ii) a polymeric outer electrically insulating layer that surrounds the tape layer.

3. The tape of Claim 1 or the insulated electrical conductor of Claim 2 wherein the polymer impregnant is a silicone polymer comprising linear segments represented by the formula-Si(R₁)(R₂)-O-.

4. The insulated electrical conductor or the tape of Claim 3 wherein R₁ and R₂ are methyl or phenyl groups.

5. The tape of Claim 1 or the insulated electrical conductor of Claim 2 wherein the dispersion deposited polymer is a perfluoropolymer selected from the group consisting of polytetrafluoroethylene, poly(hexafluoropropylene-co-tetrafluoroethylene), poly(perfluoropropylvinylether-co-tetrafluoroethylene), and poly(perfluoromethylvinylether-co-tetrafluoroethylene), and mixtures thereof.

6. The tape of Claim 1 or the insulated electrical conductor of Claim 2 in which the liquid of the liquid dispersion is water.

7. The insulated electrical conductor of Claim 2 wherein the polymer of said outer layer and the dispersion deported polymer will form an adhesive bond when heated in contact with each other.

8. The insulated electrical conductor of Claim 2 wherein said inner layer has a thickness of between 15 and 100 µm, preferably between 20 and 70 µm.

9. The insulated electrical conductor of Claim 2 wherein said outer layer has a thickness of between 50 and 300 µm, preferably between 75 and 200 µm.

10. The insulated electrical conductor of Claim 2 wherein said outer layer comprises a perfluoropolymer, preferably poly(ethylene-tetrafluoroethylene).

11. The insulated electrical conductor of Claim 2 wherein said outer layer comprises a tape wrapped polymer film, preferably a tape-wrapped polymer film which comprises a perfluoropolymer.

12. The tape of Claim 1 having a thickness of no greater than 75 µm, preferably less than 50 µm.

13. The tape of Claim 1 wherein the thickness of the dispersion deposited polymer layer is no greater than 30 µm, preferably no greater than 20 µm.

14. The tape of Claim 1 having a tensile strength of at least 5 N/cm.

15. The tape of Claim 1 wherein said solvent deposited dispersion polymer layer comprises fabric or continuous fiber.

16. The tape of Claim 1 wherein said solvent deposited dispersion polymer layer comprises at least 3 wt% of an inorganic filler, preferably wherein the inorganic filler is a fiber, flake or high surface area silica.

17. The insulated electrical conductor of Claim 2, in which:
(a) the conductor comprises a stranded plated copper wire having an effective diameter between 300 and 3000 µm, and
(b) the insulation comprises
(i) a wrapped electrically insulating layer as said inner layer comprising a mica tape core layer having a thickness between 15 and 100 µm; and
(ii) as said outer electrically insulating layer an uncrosslinked layer comprising at least 80 weight% perfluoropolymer that surrounds and is in direct physical contact with the inner mica tape layer, the outer layer having a thickness of between 50 and 300 µm and being adherent to the inner layer.

18. The insulated electrical conductor of Claim 2 or Claim 17 wherein there is interposed between the conductor and the mica tape layer, a separately applied polymer layer.

19. A tape of Claim 1, in which the deposited perfluoropolymer layer at each side is at least 2 µm thick.

20. A method of fabricating a coated mica tape or sheet comprising the steps of:
(a) treating mica paper with from 2 to 30 weight% of a silicone polymer impregnant said weight% being based on the preimpregnation weight of the paper, and
(b) coating both surfaces of the impregnated mica paper with a fluoropolymer dispersion.

21. The method of Claim 20 wherein said dispersion comprises a medium which is water.

22. The method of Claim 20 wherein said polymer impregnant is a silicone polymer comprising linear segments represented by the formula -Si(R₁)(R₂)-O- wherein R₁ and R₂ are methyl or phenyl groups.

23. The method of Claim 20 wherein said polymer dispersion is applied in multiple steps.

## Patentansprüche

1. Streifen, der aufweist;
(a) einen Kern aus glimmerhaltigem Papier, wobei das glimmerhaltige Papier mit zwischen 2 bis 30 Gew.-%, auf der Basis des Gewichts des Papiers vor der Tränkung, eines aus Siliconpolymer bestehenden Tränkungsmittels getränkt worden ist, und
(b) ein Fluorpolymer, das unmittelbar aus einer flüssigen Dispersion auf beide Seiten des isolierten elektrischen Leiters aus dem getränkten glimmerhaltigen Papier abgeschieden worden ist.

2. Isolierter, elektrischer Leiter, der umfasst;
(a) einen lang gestreckten elektrischen Leiter, und
(b) eine den elektrischen Leiter umgebende elektrische Isolierung, wobei die Isolierung umfasst;
(i) den Streifen gemäß Anspruch 1 als eine inner Schicht, welche den Leiter umgibt, und
(ii) eine polymere, äußere, elektrisch isolierende Schicht, welche die Schicht des Streifens umgibt.

3. Streifen gemäß Anspruch 1 oder isolierter elektrischer Leiter gemäß Anspruch 2, bei welchem das aus einem Polymer bestehende Tränkungsmittel aus einem Siliconpolymer besteht, welches lineare Segmente aufweist, wobei letztere dargestellt werden durch die Formel:
Si(R₁) (R₂) -O-

4. Isolierter elektrischer Leiter oder Streifen gemäß Anspruch 3, bei welchem R₁ und R₂ aus Methyl- oder Phenyl-Gruppen bestehen.

5. Streifen gemäß Anspruch 1 oder isolierter elektrischer Leiter gemäß Anspruch 2, bei welchem das durch Dispersion abgeschiedene Polymer aus einem Perfluorpolymer besteht, welches ausgewählt wird aus der Gruppe bestehend aus Polytetrafluorethylen, Poly(hexafluorpropylen-co-tetrafluorethylen), Poly(perfluorpropylvinylether-co-tetrafluorethylen), und Poly(perfluormethylvinylether-co-tetrafluorethylen) und aus Mischungen derselben.

6. Streifen gemäß Anspruch 1 oder isolierter elektrischer Leiter gemäß Anspruch 2, bei welchem die Flüssigkeit der flüssigen Dispersion aus Wasser besteht.

7. Isolierter elektrischer Leiter gemäß Anspruch 2, bei welchem das Polymer aus der äußeren Schicht und das aus der Dispersion abgeschiedene Polymer eine klebende Verbindung bilden werden, wenn sie erhitzt werden während sich das eine im Kontakt mit dem anderen befindet.

8. Isolierter elektrischer Leiter gemäß Anspruch 2, bei welchem die innere Schicht eine Dicke von zwischen 5 und 100 µm aufweist, und vorzugsweise eine solche von zwischen 20 und 70 µm.

9. Isolierter elektrischer Leiter gemäß Anspruch 2, bei welchem die äußere Schicht eine Dicke von zwischen 50 und 300 µm aufweist, und vorzugsweise eine solche von zwischen 75 und 200 µm.

10. Isolierter elektrischer Leiter gemäß Anspruch 2, bei welchem die äußere Schicht Perfluorpolymer, vorzugsweise Poly(ethylen-tetrafluorethylen) enthält.

11. Isolierter elektrischer Leiter gemäß Anspruch 2, bei welchem die äußere Schicht einen mit einem Streifen umgebenen Polymerfilm, vorzugsweise einen mit einem Streifen umgebenen Polymerfilm umfasst, welcher ein Perfluorpolymer enthält.

12. Streifen gemäß Anspruch 1, bei welchem die Dicke nicht größer als etwa 75 µm ist und vorzugsweise unter 50 µm liegt.

13. Streifen gemäß Anspruch 1, bei welchem die Dicke des durch Dispersion abgeschiedenen Polymers nicht größer als 30 µm ist und vorzugsweise nicht größer als 20 µm ist.

14. Streifen gemäß Anspruch 1, welcher eine Zugfestigkeit von mindestens 5 N/cm aufweist.

15. Streifen gemäß Anspruch 1, bei welchem die Schicht des aus der Lösung heraus abgeschiedenen Dispersionspolymers ein Gewebe oder eine kontinuierliche Faser enthält.

16. Streifen gemäß Anspruch 1, bei welchem die Schicht des aus der Lösung heraus abgeschiedenen Dispersionspolymers mindestens 3 Gew.-% eines anorganischen Füllmaterials aufweist, vorzugsweise eines solchen in dem das anorganische Füllmaterial aus Fasern, Flocken oder aus einem Silikamaterial mit einer hohen Oberflächenausdehnung besteht.

17. Isolierter elektrischer Leiter gemäß Anspruch 2, bei welchem;
(a) der Leiter einen verlitzten, plattierten Kupferdraht aufweist, welcher einen tatsächlichen Durchmesser von zwischen 300 und 3000 µm aufweist, und
(b) die Isolierung beinhaltet;
(i) eine umwickelte, elektrisch isolierende Schicht als die innere Schicht, welche eine von einem glimmerhaltigen Streifen gebildete Kernschicht enthält mit einer Dicke von zwischen 15 und 100 µm; und
(ii) als die äußere elektrisch isolierende Schicht eine vernetzte Schicht, welche mindestens 80 Gew.-% Perfluorpolymer enthält und in einem unmittelbaren physikalischen Kontakt steht mit der inneren glimmerhaltigen Streifenschicht, wobei die äußere Schicht eine Dicke von zwischen 50 und 300 µm aufweist und an der inneren Schicht anhaftet.

18. Isolierter elektrischer Leiter gemäß Anspruch 2 oder Anspruch 17, bei welchem eine separat aufgebrachte Polymerschicht zwischen dem Leiter und der glimmerhaltigen Streifenschicht angeordnet wird.

19. Streifen gemäß Anspruch 1, bei welchem die Dicke der abgeschiedenen Schicht des Perfluorpolymers auf einer jeden Seite mindestens 2 µm dick ist.

20. Verfahren zur Herstellung eines beschichteten glimmerhaltigen Streifens oder einer ebensolchen Folie, welches die folgenden Schritte aufweist;
(a) ein Behandeln eines glimmerhaltigen Papiers mit 2 bis 30 Gew.-% eines Tränkungsmittels aus einem Siliconpolymer, wobei der Gewichtsprozentsatz auf dem Gewicht des Papiers vor der Tränkung basiert, und
(b) ein Beschichten der beiden Oberflächen des mit Glimmer getränkten Papiers mit einer Fluorpolymerdispersion.

21. Verfahren gemäß Anspruch 20, bei welchem die Dispersion ein Medium enthält, welches aus Wasser besteht.

22. Verfahren gemäß Anspruch 20, bei welchem das aus einem Polymer bestehende Tränkungsmittel von Siliconpolymer gebildet wird, welches lineare Segmente aufweist, wobei letztere dargestellt werden durch die Formel:
Si (R₁) (R₂) -O-
in welcher R₁ und R₂ aus Methyl- oder Phenyl-Gruppen bestehen.

23. Verfahren gemäß Anspruch 20, bei welchem die Polymerdispersion in mehrfachen Schritten aufgetragen wird.

## Revendications

1. Ruban comprenant:
(a) un coeur de papier de mica, le papier de mica ayant été imprégné avec de 2 à 30% en poids basés sur le poids de pré-imprégnation du papier d'un imprégnant de polymère de silicone, et
(b) un fluoropolymère directement déposé à partir d'une dispersion liquide sur les deux côtés du papier de mica imprégné.

2. Conducteur électrique isolé comprenant:
(a) un conducteur électrique allongé, et
(b) une isolation électrique entourant le conducteur, ladite isolation comprenant:
(i) le ruban selon la revendication 1 en tant que couche interne qui entoure le conducteur,
(ii) une couche électriquement isolante externe polymère qui entoure la couche de ruban.

3. Ruban selon la revendication 1 ou conducteur électrique isolé selon la revendication 2, dans lequel l'imprégnant de polymère est un polymère de silicone comprenant des segments linéaires représentés par la formule -Si (R₁) (R₂)-O-.

4. Conducteur électrique isolé ou ruban selon la revendication 3, dans lequel R₁ et R₂ sont des groupes méthyles ou phényles.

5. Ruban selon la revendication 1 ou conducteur électrique isolé selon la revendication 2, dans lequel le polymère déposé par une dispersion est un perfluoropolymère choisi dans le groupe constitué de polytétrafluoroéthylène, de poly(hexafluoropropylène-co-tétrafluoroéthylène), de poly(perfluoropropylvinyléther-co-tétrafluoroéthylène) et de poly(perfluorométhylvinyléther-co-tétrafluoroéthylène) et de mélanges de ceux-ci.

6. Ruban selon la revendication 1 ou conducteur électrique isolé selon la revendication 2, dans lequel le liquide de la dispersion liquide est de l'eau.

7. Conducteur électrique isolé selon la revendication 2, dans lequel le polymère de ladite couche externe et le polymère déposé par une dispersion formeront une liaison adhésive lorsqu'ils sont chauffés en contact l'un avec l'autre.

8. Conducteur électrique isolé selon la revendication 2, dans lequel ladite couche interne possède une épaisseur entre 15 et 100 µm, de préférence entre 20 et 70 µm.

9. Conducteur électrique isolé selon la revendication 2, dans lequel ladite couche externe possède une épaisseur entre 50 et 300 µm, de préférence entre 75 et 200 µm.

10. Conducteur électrique isolé selon la revendication 2, dans lequel ladite couche externe comprend un perfluoropolymère, de préférence un poly(éthylène-tétrafluoroéthylène).

11. Conducteur électrique isolé selon la revendication 2, dans lequel ladite couche externe comprend un film de polymère enveloppé d'un ruban, de préférence un film de polymère enveloppé d'un ruban qui comprend un perfluoropolymère.

12. Ruban selon la revendication 1, possédant une épaisseur ne dépassant pas 75 µm, de préférence de moins 50 µm.

13. Ruban selon la revendication 1, dans lequel l'épaisseur de la couche de polymère déposé par une dispersion ne dépasse pas 30 µm, de préférence pas plus de 20 µm.

14. Ruban selon la revendication 1, présentant une résistance à la traction d'au moins 5 N/cm.

15. Ruban selon la revendication 1, dans lequel ladite couche de polymère de dispersion déposé par un solvant comprend un tissu ou une fibre continue.

16. Ruban selon la revendication 1, dans lequel ladite couche de polymère de dispersion déposé par un solvant comprend au moins 3% en poids d'une charge inorganique, de préférence dans lequel la charge inorganique est une fibre, un flocon ou une silice à surface spécifique élevée.

17. Conducteur électrique isolé selon la revendication 2, dans lequel:
(a) le conducteur comprend un fil de cuivre plaqué toronné avec un diamètre effectif entre 300 et 3000 µm, et
(b) l'isolation comprend:
(i) une couche électriquement isolante enveloppée en tant que ladite couche interne comprenant une couche de coeur de ruban de mica avec une épaisseur entre 15 et 100 µm; et
(ii) en tant que ladite couche électriquement isolante externe une couche non réticulée comprenant au moins 80% en poids de perfluoropolymère qui entoure et qui est en contact physique direct avec la couche de ruban de mica interne, la couche externe possédant une épaisseur entre 50 et 300 µm et étant adhérente à la couche interne.

18. Conducteur électrique isolé selon la revendication 2 ou la revendication 17, dans lequel il est interposé entre le conducteur et la couche de ruban de mica une couche de polymère appliquée séparément.

19. Ruban selon la revendication 1, dans lequel la couche de perfluoropolymère déposé à chaque côté est d'au moins 2 µm d'épaisseur.

20. Procédé pour la fabrication d'un ruban ou d'une feuille de mica revêtu comprenant les étapes:
(a) de traitement d'un papier de mica avec de 2 à 30% en poids d'un imprégnant de polymère de silicone, ledit % en poids étant basé sur le poids de pré-imprégnation du papier, et
(b) de revêtement des deux surfaces du papier de mica imprégné avec une dispersion de fluoropolymère.

21. Procédé selon la revendication 20, dans lequel ladite dispersion comprend un milieu qui est de l'eau.

22. Procédé selon la revendication 20, dans lequel ledit imprégnant de polymère est un polymère de silicone comprenant des segments linéaires représentés par la formule -Si (R₁) (R₂) -O-, où R₁ et R₂ sont des groupes méthyles ou phényles.

23. Procédé selon la revendication 20, dans lequel ladite dispersion de polymère est appliquée en étapes multiples.
